# DEMANDE DE BREVET EUROPEEN

(11) **EP 4 738 157 A1**
(43) Date de publication de la demande: **06.05.2026**
(21) Numéro de dépôt: 25180659.2
(22) Date de dépôt: 04.06.2025
(51) Int. Cl.: G06F 21/32, G06V 10/141, G06V 40/40

(54) **PROCÉDÉ DE SÉCURISATION D'ACQUISITION BIOMÉTRIQUE**

(30) Priorité: 31.10.2024 FR 2411937
(71) Demandeur: Idemia Public Security France, 92400 Courbevoie (FR)
(72) Inventeur: MICAELLI, Fabien, 92400 COURBEVOIE (FR)
(74) Mandataire: IPS

(57) **Abrégé**

La présente invention concerne un procédé sécurisation d'acquisition biométrique comportant des étapes de :
- détermination d'un premier ensemble de valeurs caractéristiques définissant un premier ensemble d'évènements lumineux dont au moins une valeur caractéristique par évènement est déterminée par tirage aléatoire ;
- pilotage en intensité d'au moins une source d'éclairage de manière à appliquer le premier ensemble d'évènements lors d'une première acquisition biométrique,
- la première acquisition biométrique, par exposition de la surface (3) d'acquisition linéairement selon une dimension prédéterminée pendant une durée d'exposition prédéterminée, émise sous forme de matrice d'acquisition ;
- caractérisation d'un premier motif observé d'éclairage ;
- évaluation d'un indice de correspondance fonction du premier motif observé et du premier motif imposé ;et
- décision de présence ou d'absence de fraude par comparaison de l'indice de correspondance à un seuil de correspondance.

## Description

### Arrière-Plan technologique

La présente invention concerne le domaine de la sécurisation des terminaux d'acquisition biométrique. En effet, les données biométriques sont sécurisées au sein d'un terminal, et lors d'échanges avec un serveur de gestion d'un parc de terminaux mais il convient aussi de sécuriser le flux d'images entre le dispositif optique d'acquisition par contact du trait biométrique, et le processeur embarqué du terminal transitant sur une nappe dédiée, de manière à se protéger contre une écoute et/ou un rejeu par un fraudeur cherchant à usurper l'identité d'un utilisateur légitime en mimant le signal transitant par la nappe par injection d'un signal émulant une acquisition biométrique antérieure de l'utilisateur légitime (appelées en anglais : « Injection Attack »).

### Présentation de l'invention

L'invention a pour but de remédier au moins en partie à ces inconvénients et préférentiellement à tous, et vise notamment à proposer une méthode de sécurisation d'acquisition biométrique qui soit robuste aux fraudes par injection, facile de mise en œuvre sur des terminaux existants et accessible à tous, sans impact significatif sur les durées d'authentification ou d'enrôlement incluant la durée d'acquisition.

Selon un aspect de l'invention, il est proposé un procédé de sécurisation d'acquisition par contact d'un trait biométrique d'un utilisateur comportant des étapes de :
- détermination d'un premier ensemble de valeurs caractéristiques définissant un premier ensemble d'évènements lumineux à appliquer à destination d'une surface d'acquisition du trait biométrique, ledit premier ensemble d'évènements décrivant une première séquence temporelle d'éclairage représentée matriciellement sous forme d'un premier motif imposé d'éclairage, lesdites valeurs caractérisant pour chaque évènement du premier ensemble une typologie d'éclairage de la surface d'acquisition et un instant d'application dudit évènement , au moins une valeur caractéristique par évènement, parmi l'instant d'application et la typologie d'éclairage, étant déterminée par tirage aléatoire ;
- pilotage en intensité d'au moins une source d'éclairage, émettant dans une première longueur d'onde, de manière à appliquer le premier ensemble d'évènements lors d'une première acquisition biométrique,
- première acquisition biométrique, par exposition de la surface d'acquisition linéairement selon une dimension prédéterminée pendant une durée d'exposition prédéterminée, émise sous forme de matrice d'acquisition ;
- caractérisation , à partir de la matrice d'acquisition de la première acquisition biométrique, d'un premier motif observé d'éclairage ;
- évaluation d'un indice de correspondance fonction du premier motif observé et du premier motif imposé ;et
- décision de présence ou d'absence de fraude par comparaison de l'indice de correspondance à un seuil de correspondance de manière à poursuivre le procédé par une étape d'enrôlement biométrique ou une étape d'authentification biométrique en cas de satisfaction au seuil de correspondance.

Ce procédé permet d'ajouter un défi lumineux lors de l'acquisition biométrique, le défi étant aléatoire par sa typologie d'éclairage et/ou d'instant d'application, et sa vérification étant mise en œuvre par l'analyse du motif observé de l'image acquise par exposition de la surface d'acquisition linéairement selon la direction de la dimension prédéterminée. Ainsi, si le motif observé ne correspond pas au motif imposé, c'est-à-dire que l'indice de correspondance est strictement inférieur à un seuil de correspondance, le procédé est interrompu, ne permettant pas l'enrôlement ou l'authentification sur la base de l'image acquise, et une alerte peut être donnée. Ce procédé permet donc d'adresser les inconvénients énumérés précédemment et s'applique préférentiellement à partir d'un terminal d'acquisition par contact de trait biométrique au sein d'un système de contrôle d'accès biométriques. Il permet ainsi de sécuriser l'acquisition aussi bien dans un contexte d'enrôlement (par exemple pour la création d'un compte d'accès), ou dans un contexte d'authentification (par exemple pour accéder à une zone donnée, d'un bâtiment ou d'un espace réel ou virtuel, ou à un service). En effet, la nature aléatoire (incluant pseudo aléatoire) du signal lumineux émis constitue un défi et permet de vérifier que l'image acquise à l'instant d'acquisition par le dispositif optique d'acquisition du terminal provient bien du terminal audit instant et non d'un objet tiers, notamment au moyen d'un enregistrement d'une image acquise par le terminal à un autre moment que ledit moment d'acquisition. En outre, ce procédé permet de réaliser de l' antifraude et de sécuriser le bus de communication entre un dispositif optique d'acquisition et un dispositif de traitement de données sans nécessiter l'extraction des instants d'application d'évènements en tant que tels des images acquises.

De manière équivalente, il peut être déterminé un indice de non correspondance et dans ce cas la condition de seuil autorisant la poursuite du procédé s'applique si l'indice de non-correspondance est inférieur à un seuil de non-correspondance.

Préférentiellement le pilotage en intensité appliquant le premier ensemble d'évènements de la séquence temporelle d'éclairage est constitué d'au moins un allumage et/ou d'au moins une extinction, notamment par canal.

Selon des caractéristiques avantageuses et non limitatives :
- Ladite évaluation d'un indice de correspondance comporte une comparaison du premier motif observé avec le premier motif imposé, l'indice de correspondance dépendant d'un rapport entre le premier motif observé et le premier motif imposé.
- Ledit procédé comporte en outre des étapes de :
   - détermination d'un deuxième ensemble de valeurs caractéristiques définissant un deuxième ensemble d'évènements lumineux à appliquer à destination de la surface d'acquisition, ledit deuxième ensemble d'évènements décrivant une deuxième séquence temporelle d'éclairage représentée matriciellement sous forme d'un deuxième motif imposé d'éclairage, lesdites valeurs caractérisant pour chaque évènement du deuxième ensemble une typologie d'éclairage de la surface d'acquisition et un instant d'application dudit évènement , au moins une valeur caractéristique par évènement, parmi l'instant d'application et la typologie d'éclairage, étant déterminée par tirage aléatoire ;
   - pilotage en intensité de la source d'éclairage de manière à appliquer le deuxième ensemble d'évènements lors d'une deuxième acquisition biométrique,
   - deuxième acquisition biométrique, par exposition de la surface d'acquisition linéairement selon la dimension prédéterminée pendant une durée d'exposition prédéterminée égale à ou différente de la durée d'exposition prédéterminée, émise sous forme de matrice d'acquisition ;
   - caractérisation , à partir de la matrice d'acquisition de la deuxième acquisition biométrique d'un deuxième motif observé d'éclairage;
   - l'évaluation de l'indice de correspondance est fonction du deuxième motif observé et du deuxième motif imposé.
- Lesdites au moins une valeur caractéristique par évènement déterminées par tirage aléatoire pour un même terminal et/ou utilisateur sont mémorisées dans un registre d'exclusion en association avec un identifiant dudit terminal et/ou un identifiant biométrique utilisateur à qui elles ont été appliquées, ce qui permet de ne pas les appliquer deux fois, au moins pendant un temps donné, au même terminal et/ou utilisateur.
- L'évaluation d'un indice de correspondance comporte une comparaison des motifs observés avec les motifs imposés, l'indice de correspondance dépendant d'un rapport entre le premier motif observé et le deuxième motif observé, divisé par un rapport entre le premier motif imposé et le deuxième motif imposé.
- Le procédé selon l'invention comprend une étape de reconstitution d'une image du trait biométrique à partir de la première et de la deuxième matrices d'acquisition, notamment par fusion à partir desdites matrices d'acquisition ; ce qui permet de se servir des images acquises pour l'authentification biométrique, sans avoir à en acquérir de nouveau.
- L'authentification biométrique ou l'enrôlement comprend :
   - une construction d'un gabarit biométrique.
- L'authentification biométrique comprend une étape de reconnaissance biométrique (matching) à partir de l'au moins une matrice d'acquisition de l'au moins une acquisition biométrique et par rapport à une donnée biométrique enrôlée.
- Le procédé comporte une étape d'initialisation se déclenchant par une détection de présence d'un objet, tel qu'un doigt ou une paume d'un individu, en contact avec la surface d'acquisition.
- Le procédé selon l'invention est mis en œuvre par ordinateur, notamment par une unité centrale de traitement d'un terminal d'acquisition par contact de trait biométrique.
- Le trait biométrique est un dermatoglyphe de doigt ou de paume.
- La valeur caractérisant l' instant d'application d'évènement désigne un rang du motif imposé d'éclairage représenté matriciellement.
- La valeur de la typologie d'éclairage désigne un état imposé d'éclairage, ou une modification d'éclairage par exemple parmi une modulation d'intensité de l'éclairage par la source d'éclairage, une coupure de la source d'éclairage ou un allumage de la source d'éclairage ; ce qui permet de créer des évènements par altération d'éclairage.
- La typologie d'éclairage désigne également la source d'éclairage, ce qui permet de distinguer plusieurs sources d'éclairage, notamment de différentes longueurs d'onde, complexifiant ainsi le défi.
- Chaque ensemble d'évènements comprend au moins deux évènements, ce qui permet de complexifier le défi.
- Lesdits instants d'application de chaque évènement de la première ou deuxième acquisition sont définis relativement au début d'exposition, propre à ladite acquisition, du premier rang dans la dimension prédéterminée de la matrice d'acquisition ; ce qui permet de synchroniser les évènements d'éclairage par rapport au début d'exposition de chaque acquisition, puis de calculer facilement les rangs affectés par les évènements dans le motif imposé, afin de pouvoir les comparer à celles du motif observé .
- La valeur de la typologie d'éclairage désigne l'état imposé d'éclairage, lesdits instants d'application de chaque évènement de la première ou deuxième acquisition caractérisant l'instant de début d'application de l'état imposé d'éclairage propre audit évènement.
- Au moins un des ensembles de valeurs caractéristiques déterminées contient pour au moins un des évènements une valeur caractérisant une fin d'application de l'état imposé d'éclairage propre audit évènement. Avantageusement, ladite valeur caractérisant une fin d'application de l'état imposé d'éclairage propre audit évènement est une durée d'application. En variante ladite valeur caractérisant une fin d'application de l'état imposé d'éclairage propre audit évènement est un instant de fin d'application.
- La durée d'application est supérieure à un tiers de période d'acquisition.
- Chaque motif imposé est exprimé sous forme d'une luminosité moyenne théorique de chaque rang de sa matrice d'acquisition, chaque motif imposé étant déterminé à partir de la séquence temporelle d'éclairage qui le caractérise et de la durée d'exposition prédéterminée de la matrice d'acquisition.
- La caractérisation de motif observé est réalisée, pour chaque acquisition biométrique, par :
   - un calcul d'une moyenne de luminosité par canal , notamment monochrome , rouge, vert, ou bleu, de chaque rang de la matrice d'acquisition dans la dimension prédéterminée.
- L'étape d'évaluation de l'indice de correspondance comporte un calcul d'un rapport des motifs observés rang à rang, notamment sous forme d'un vecteur, entre la luminosité moyenne de chaque rang de la matrice d'acquisition de la deuxième acquisition et la luminosité moyenne de chaque ligne de la matrice d'acquisition de la première acquisition et un rapport des motifs imposés rang à rang, notamment sous forme d'un vecteur, entre la luminosité théorique de chaque rang du deuxième motif imposé et la luminosité théorique moyenne de chaque rang du premier motif imposé.

Selon un autre aspect, il est proposé un système de contrôle d'accès biométrique comprenant :
- un terminal d'acquisition par contact d'un trait biométrique , ledit terminal comprenant :
   - un dispositif optique d'acquisition par contact comprenant un capteur, une surface d'acquisition, configurée de manière à être en contact avec le trait biométrique, et un obturateur déroulant configuré pour exposer la surface d'acquisition linéairement selon une dimension prédéterminée pendant une durée d'exposition prédéterminée, ledit dispositif optique d'acquisition étant configuré pour émettre un signal représentatif du trait biométrique acquis sous forme de matrice d'acquisition ,
   - une source d'éclairage émettant dans une première longueur d'onde et disposée à l'arrière de la surface d'acquisition et émettant en direction de la surface d'acquisition ;
   - un organe de pilotage en intensité d'au moins une source d'éclairage émettant dans une première longueur d'onde de manière à appliquer le premier ensemble d'évènements lors d'une première acquisition biométrique,
   - un bus de communication entre dispositif optique d'acquisition et un dispositif de traitement de données ;
- le dispositif de traitement de données , comprenant:
   - un module de détermination d'un premier ensemble de valeurs caractéristiques définissant un premier ensemble d'évènements lumineux à appliquer à destination d'une surface d'acquisition du trait biométrique, ledit premier ensemble d'évènements décrivant une première séquence temporelle d'éclairage représentée matriciellement sous forme d'un premier motif imposé d'éclairage, lesdites valeurs caractérisant pour chaque évènement du premier ensemble une typologie d'éclairage de la surface d'acquisition et un instant d'application dudit évènement, au moins une valeur caractéristique par évènement, parmi l'instant d'application et la typologie d'éclairage, étant déterminée par tirage aléatoire ;
   - un module de caractérisation d'un motif observé d'éclairage de ladite matrice d'acquisition ;
   - un module d'évaluation d'un indice de correspondance fonction du motif observé et du motif imposé et de décision de présence ou d'absence de fraude.

Ledit système présente les mêmes avantages que le procédé selon l'invention.

Avantageusement, le capteur est à réflexion totale.

Avantageusement, le capteur est monochrome ou multicanaux (RVB).

Avantageusement, le dispositif de traitement de données comprend une unité centrale de traitement locale au terminal pilotant l' organe de pilotage et comprenant une horloge interne haute précision.

Avantageusement, le dispositif de traitement de données comprend un générateur de nombre aléatoire.

Avantageusement, le système de contrôle d'accès biométrique met en œuvre le procédé selon l'invention.

Avantageusement le terminal comporte une autre source d'éclairage émettant dans une autre longueur d'onde, chaque ensemble de valeurs caractéristiques comprenant par évènement une valeur désignant la source d'éclairage parmi les sources d'éclairage du terminal ; ce qui permet de constituer des défis multicolores, plus complexes.

Dans un mode de réalisation, sont inclus dans le dispositif de traitement de données.
- une mémoire, stockant des données biométriques enrôlées, notamment sous forme de gabarit ;
- un module de reconnaissance biométrique à partir de la première acquisition biométrique ou d'une image reconstituée du trait biométrique et des données biométriques enrôlées.

Avantageusement, ledit système comporte un module de reconstitution, au moins partielle, d'une image du trait biométrique, ce qui permet en cas d'acquisitions biométriques multiples de reconstituer, notamment par fusion, une image complète de qualité du trait biométrique.

Selon un autre aspect de l'invention, il est proposé un programme d'ordinateur comprenant des instructions adaptées à la mise en œuvre de chacune des étapes du procédé selon l'invention lorsque ledit programme est exécuté sur un ordinateur.

Selon un autre aspect de l'invention, il est proposé un moyen de stockage non transitoire d'informations, amovible ou non, partiellement ou totalement lisible par un ordinateur ou un microprocesseur, comportant des instructions de code d'un programme d'ordinateur pour l'exécution de chacune des étapes du procédé selon l'invention .

### Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :
[fig.1] la figure 1 illustre une personne approchant son doigt d'un terminal d'acquisition biométrique selon un mode de réalisation possible de l'invention,
[fig.2] la figure 2 expose un schéma de principe d'étapes mises en œuvre dans le procédé de sécurisation, selon un mode de réalisation possible de l'invention ;
[fig.3] la figure 3 illustre un schéma de principe selon un mode de mise en œuvre du procédé de sécurisation;
[fig.4] la figure 4 illustre un exemple de structure d'un dispositif de traitement de données d'un système selon l'invention; et
[fig.5] la figure 5 représente un exemple de signaux calculés lors de la mise en œuvre du procédé selon un mode de réalisation de l'invention.

Des références identiques seront utilisées d'une figure à l'autre pour désigner des éléments identiques ou similaires, dans leur forme ou dans leur fonction.

Pour un motif de concision le terme sensiblement désigne les valeurs à plus ou moins 10%.

### Description détaillée

L'invention peut s'appliquer dans différents contextes d'enrôlement ou d'authentification en vue d'un accès au moyen d'un terminal d'acquisition par contact de trait biométrique .

Le procédé selon l'invention peut être utilisé dans diverses applications pour détecter des fraudes par injection lors d'un enrôlement ou d'une authentification , la détection de fraude reposant sur une évaluation d'un indice de correspondance fonction du motif observé sur l'image biométrique acquise et du motif imposé d'éclairage de la surface d'acquisition , le motif imposé dépendant d'un tirage aléatoire.

L'invention peut servir dans le cas d'un accès d'un utilisateur à un véhicule ou à une zone restreinte, notamment, d'un bâtiment ou d'un espace, portuaire par exemple.

Pour des raisons de simplicité et de façon illustrative et non limitative, l'invention sera ci-dessous présentée dans le cadre d'un procédé biométrique d'authentification d'un dermatoglyphe, mais les enseignements peuvent être utilisés pour toute application impliquant l'authentification d'un réseau veineux. De même, dans le mode de mise en œuvre illustré le dermatoglyphe est un dermatoglyphe de doigt mais en variante, ou le dermatoglyphe peut être de paume.

Le terme tirage aléatoire désigne le tirage au sort de nombre aléatoire ou pseudo-aléatoire.

Le terme authentification désigne l'authentification en un contre un ou en un contre n, aussi appelée identification.

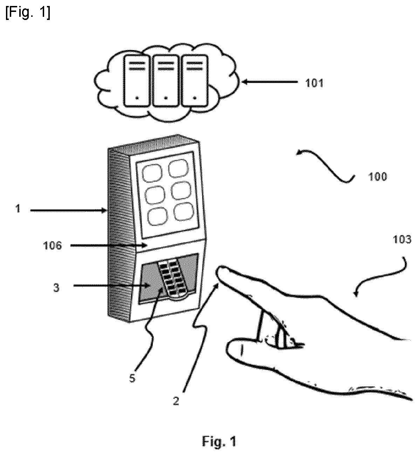

En référence à la [Fig.1], le procédé d'authentification peut être mis en oeuvre au moyen d'un système 100 de contrôle d'accès biométrique comprenant un terminal 1 d'acquisition biométrique par contact auquel un utilisateur 103 présente son doigt pour y apposer son dermatoglyphe de doigt (empreinte papillaire). Le terminal 1 d'acquisition biométrique comporte un capteur muni d'un obturateur déroulant (rolling shutter), et une source d'éclairage 5, disposée à l'arrière de la surface 3 d'acquisition de manière à l'éclairer, ladite surface 3 d'acquisition étant configurée pour être en contact avec le dermatoglyphe 2 de l'utilisateur 103.

La surface 3 d'acquisition est par exemple tout ou partie de la surface supérieure d'une lame, appelée aussi prisme, (notamment de matériau transparent tel que du polyméthacrylate de méthyle (PMMA)) formant un milieu de propagation de la lumière, ou d'une dalle TFT (Thin-Film-Transistor).

Une source d'éclairage 5, disposée à l'arrière de la surface 3 d'acquisition se réfère par exemple :
- à une source d'éclairage disposée sous la surface 3 d'acquisition et émettant directement vers la surface d'acquisition ; ou
- à une source d'éclairage disposée latéralement sous la surface 3 d'acquisition munie d'un diffuseur sous la surface 3 d'acquisition pour guider l'émission lumineuse selon ce chemin optique vers la surface d'acquisition.

Lors d'une acquisition biométrique l'obturateur déroulant expose la surface 3 d'acquisition linéairement selon une dimension prédéterminée, préférentiellement verticalement : ligne par ligne, pendant une durée d'exposition prédéterminée, l'acquisition biométrique étant réalisée par le dispositif optique d'acquisition et émise sous forme de matrice d'acquisition.

La source d'éclairage 5 comprend par exemple des diodes électroluminescentes (DELs)rouges.

Le capteur, par exemple à réflexion totale, est disposé de manière à recevoir la lumière diffusant par le doigt posé sur la surface d'acquisition et son champ d'acquisition recouvre tout ou partie de la surface d'acquisition. La lumière émise par la source d'éclairage 5 transite par un chemin optique entre la surface 3 d'acquisition et le capteur. Le capteur est par exemple disposé à l'arrière de la surface 3 d'acquisition et peut notamment être positionné en décalé par rapport à la surface d'acquisition (capteur CMOS par exemple), ou par exemple être combiné avec la surface 3 d'acquisition (capteur sous forme de dalle TFT par exemple). En variante l'obturateur déroulant pourrait exposer horizontalement : colonne par colonne.

Un circuit imprimé PCB (Printed Circuit Board) (non représenté) est par exemple disposé à l'arrière du capteur et relié au dispositif 106 de traitement de données embarqué du terminal 1 par une nappe (non représentée). En variante, le capteur pourrait être soudé sur le même circuit imprimé que l'unité centrale de traitement (CPU) du dispositif 106 de traitement de données.

Chaque image acquise par le dispositif optique d'acquisition et plus précisément par le capteur transite, brute ou après application de transformation, par un bus sur la nappe lors de sa communication au dispositif 106 de traitement de données embarqué du terminal 1 d'acquisition biométrique. Il s'agit donc notamment de sécuriser les informations biométriques transitant via cette nappe en les surveillant, de manière à se prémunir contre une déconnexion frauduleuse du bus et notamment contre une fraude par injection qui consisterait en ce qu'un attaquant ayant écouté des données biométriques les rejoue ultérieurement. Le terminal d'acquisition biométrique comporte un dispositif de traitement de l'information 106 apte à mettre en œuvre tout ou partie des étapes du procédé selon l'invention. Dans le mode de réalisation illustré, le système 100 de contrôle d'accès biométrique comporte un dispositif 101 distant de traitement de données, tel qu'un serveur, et les données transitant entre le terminal 1 d'acquisition biométrique et le dispositif 101 distant transitent préférentiellement de manière chiffrée, notamment sur un réseau Ethernet, voire sur un réseau internet. Préférentiellement, le dispositif 101 distant sert à effectuer les tâches biométriques de comparaisons de gabarit biométriques lors d'une authentification du trait biométrique.

Le terminal 1 d'acquisition biométrique peut être un terminal mobile d'authentification, tel qu'une borne mobile de contrôle d'identité dans un aéroport, ou un terminal mobile de contrôle d'identité d'une station de vote, ou un terminal fixe tel une borne fixe dédiée aux contrôles d'identité aux frontières par exemple. Le terminal 1 d'acquisition biométrique peut encore être un sous-système électronique embarqué dans un véhicule formant un système connecté de reconnaissance du conducteur, ou d'accès à des applications pour le conducteur ou le passager. Le système 100 de contrôle d'accès biométrique peut comporter de multiples terminaux 1.

Le dispositif 106 de traitement de données comprend au moins un processeur et une mémoire, et permet d'exécuter un programme informatique pour la mise en œuvre du procédé selon l'invention.

Lorsque l'utilisateur 103 souhaite s'identifier auprès du terminal 1 d'acquisition biométrique afin d'accéder à un service ou à une zone d'accès restreint, il soumet d'abord une requête d'identification auprès dudit terminal 1 d'acquisition biométrique, par exemple, simplement en apposant son doigt sur la surface 3 d'acquisition du capteur contact. Selon un autre exemple, la requête peut être soumise à l'aide d'une interface homme-machine, «IHM», dont peut être muni le terminal 1 d'acquisition biométrique.

Une fois la requête soumise, le terminal 1 d'acquisition biométrique procède à l'acquisition d'un trait biométrique de l'utilisateur 103 en appliquant le procédé de sécurisation selon l'invention de manière à détecter notamment la survenue d'une fraude par injection et interrompre l'authentification en cas de fraude détectée. Le trait biométrique est choisi parmi au moins un dermatoglyphe de doigts, un dermatoglyphe palmaire, un réseau veineux de doigt, ou leur combinaison. Avantageusement, que ce soit en cas d'autorisation de poursuite (absence de fraude) ou en cas d'interruption (fraude détectée) du procédé d'authentification, ce statut est horodaté et inscrit dans un registre local ou dans un registre distant du système 100 de contrôle d'accès biométrique. Avantageusement, ce registre est monitoré de manière que si le nombre de tentatives échouées pour un même identifiant biométrique sur un temps donné est supérieur à un seuil d'échec prédéterminé, alors une alerte système est générée de manière à être communiquée à un agent en charge de la gestion de tout ou partie du système de contrôle d'accès biométrique.

En cas d'absence de fraude détectée, le processus d'authentification biométrique se poursuit et l'acquisition biométrique est envoyée au dispositif 101 distant de traitement de données. En variante les étapes du procédé de sécurisation selon l'invention peuvent inclure des étapes mises en œuvre sur le dispositif 101 distant et l'acquisition biométrique a alors déjà été envoyée audit dispositif 101 distant avant la décision de présence ou d'absence de fraude. L'acquisition biométrique reçue par le dispositif 101 distant, constitue alors l'épreuve d'authentification (issue d'un enrôlement préalable), notamment mise sous forme d'un gabarit biométrique d'épreuve selon un schéma d'encodage. Dès lors le dispositif 101 distant compare l'épreuve d'authentification à un (authentification dite un contre un) ou plusieurs (authentification dite un contre n) gabarits biométriques de référence stockés dans une base de données de gabarits biométriques. En variante, les étapes d'authentification peuvent être réalisées sur le terminal 1 d'acquisition biométrique sans qu'un serveur distant soit nécessaire, notamment en cas de base de données de gabarits biométriques limitée ou en cas d'authentification multi facteurs ce qui permet de réaliser une authentification un contre un, préférentiellement locale dans le cas par exemple d'un terminal 1 multi facteurs comportant un lecteur de carte à puce, la puce de la carte comprenant un encodage du trait biométrique du porteur de carte, c'est-à-dire son gabarit biométrique de référence, ou une clé d'accès à ce gabarit biométrique de référence dans la mémoire du terminal 1 d'acquisition biométrique.

S'il existe une correspondance entre l'épreuve d'authentification et au moins un gabarit biométrique de référence autorisé de la base de données de gabarits biométriques, ou en cas d'authentification un contre un entre l'épreuve d'authentification et le gabarit biométrique de référence, l'utilisateur 103 est authentifié. Il est alors autorisé à accéder au service ou à la zone d'accès restreint. Dans le cas contraire, l'utilisateur 103 n'est pas authentifié et l'accès lui est refusé. Le système 100 de contrôle d'accès biométrique peut notifier l'utilisateur 103 du statut de l'authentification, à savoir de la réussite ou de l'échec de l'authentification, à l'aide d'un signal lumineux, un signal sonore, un message, ou leur combinaison. Dans les deux cas le statut de l'authentification est horodaté et vient compléter le statut préférentiellement déjà inscrit dans le registre local ou dans le registre externe.

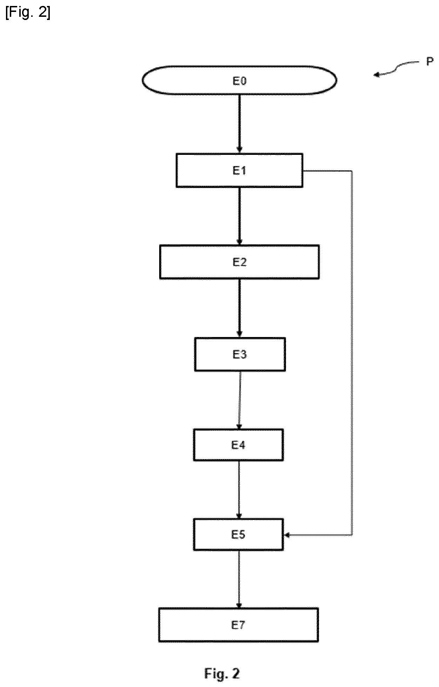

En référence à la [Fig.2], le procédé selon l'invention est décrit sous forme d'un organigramme présentant les étapes mises en œuvre dans le procédé de sécurisation, selon un mode de réalisation possible de l'invention. L'utilisateur 103 soumet une requête d'identification auprès dudit terminal 1 d'acquisition biométrique en apposant son doigt sur la surface 3 d'acquisition, c'est-à-dire par détection de présence. Un procédé biométrique d'authentification est alors initié et appelle le procédé P de sécurisation selon l'invention afin de détecter des tentatives de fraude par injection et, en cas de telle fraude, empêcher la poursuite de l'authentification et ainsi empêcher l'accès.

L'étape d'initialisation E0 du procédé P de sécurisation correspond à la réception, notamment par le dispositif de traitement de l'information 106 du terminal 1, de ladite requête et en particulier d'une image acquise sans éclairage lors de cette phase de détection de présence. Ainsi, les variations de conditions d'acquisition selon le procédé P ne sont appliquées que lorsqu'un doigt est détecté sur le capteur, et ce afin de ne pas perturber l'utilisateur par un aspect visuel erratique, et afin de baisser la consommation électrique du terminal 1. En outre, en considérant le doigt immobile sur la surface 3 d'acquisition, une variation d'éclairage entre deux acquisitions permet d'estimer pour chaque rang (ici ligne) de la matrice d'acquisition le coefficient multiplicateur de luminosité entre les deux acquisitions, car les deux signaux acquis sont identiques aux différences d'éclairage près. Dans ce mode de réalisation, l'étape d'initialisation E0 comporte une estimation, éclairage éteint, de la luminosité moyenne de chaque ligne MLI_ext à partir de l'image acquise par le dispositif optique d'acquisition lors de la phase de détection de présence, de manière à évaluer la luminosité environnementale perçue par le capteur pour l'éliminer des calculs ultérieurs (en soustrayant de la ou des images ultérieures acquises avec éclairage ladite image acquise sans éclairage) et en améliorer leur précision en ne considérant que la lumière induite par l'éclairage de(s) source(s) pilotée(s). Néanmoins, ladite luminosité environnementale étant négligeable, cette estimation demeure optionnelle.

Le procédé P de sécurisation se poursuit alors par la mise en oeuvre, par le dispositif de traitement de l'information 106, des instructions de détermination E1 d'un premier ensemble de valeurs caractéristiques définissant un premier ensemble d'évènements lumineux à appliquer à destination d'une surface d'acquisition du dermatoglyphe, ledit premier ensemble d'évènements décrivant une première séquence temporelle d'éclairage représentée matriciellement sous forme d'un premier motif imposé d'éclairage, lesdites valeurs caractérisant pour chaque évènement du premier ensemble une typologie d'éclairage de la surface d'acquisition et un instant d'application dudit évènement , au moins une valeur caractéristique par évènement, parmi la typologie d'éclairage et l'instant d'application, étant déterminée par tirage aléatoire. La représentation sous forme matricielle du motif d'éclairage, se traduit par exemple par une table par source d'éclairage ayant avantageusement comme nombre de lignes le même nombre de lignes que la matrice d'acquisition et stockant dans chaque ligne une valeur d'intensité lumineuse imposée et cette représentation permet de la rapporter ensuite à une matrice d'acquisition, c'est-à-dire au signal résultant d'une acquisition biométrique par exposition de la surface d'acquisition linéairement selon une dimension prédéterminée pendant une durée d'exposition prédéterminée. La table peut également consister en une colonne unique puisqu'en moyenne la même valeur d'intensité est appliquée à toute la ligne, dans ce cas une multiplication par une table identité de largeur de la matrice d'acquisition est par exemple appliquée en vue de l'évaluation E5 de l'indice de correspondance. Ce mode de mise en œuvre permet également de filtrer le bruit.

Dans le mode de réalisation illustré ici, la valeur de la typologie d'éclairage désigne une modification d'éclairage parmi une coupure de la source d'éclairage ou un allumage de la source d'éclairage, ce qui permet de créer des évènements par altération d'éclairage.

La valeur de la typologie d'éclairage désigne également la source d'éclairage si le terminal 1 comporte plusieurs sources 5 d'éclairage aptes à éclairer , directement, ou indirectement, la surface d'acquisition et émettant dans différentes longueurs d'onde telles qu'une première source d'éclairage composée d'un ensemble de diodes électroluminescentes rouges (appelé aussi « backlight » en anglais) combinée par exemple à une autre source d'éclairage constituée d'une diode électroluminescente (DEL)rouge isolée , et/ou une seconde source d'éclairage composée par exemple d'une diode électroluminescente verte et/ou une troisième source d'éclairage composée d'une diode électroluminescente bleue. Cette diversité de nature et de longueur d'onde des sources d'éclairage permet de complexifier le défi de manière à ce qu'un ensemble d'évènements comprenne au moins 2 évènements (par exemple : un allumage et une extinction) et préférentiellement entre 4 et 6 (notamment avec des sources d'éclairage multiples).

Pour chaque évènement, est tiré au sort aléatoirement un instant d'application de l'évènement, dans une plage de valeurs, par exemple entre 0 et la durée d'acquisition prédéterminée, et/ou une typologie d'éclairage de la surface d'acquisition parmi une liste de valeurs désignant chacune la modification d'éclairage à appliquer et la source 5 d'éclairage associée, laquelle liste est avantageusement dynamique, en ce qu'elle dépend de l'état courant de chaque source 5 d'éclairage, notamment fonction de l'évènement précédent pour chaque source d'éclairage, de manière à constituer des combinaisons réalisables.

Préférentiellement, un instant d'application d'un évènement est défini relativement au début d'exposition, propre à l'acquisition concernée, du premier rang dans la dimension prédéterminée de la matrice d'acquisition, ce qui permet de synchroniser les évènements d'éclairage par rapport au début d'exposition de chaque acquisition, puis de calculer facilement les rangs affectés par les évènements dans le motif imposé, afin de pouvoir les comparer ultérieurement à ceux du motif observé. La valeur caractérisant l'instant d'application d'évènement désigne donc un rang, ici une ligne, du motif imposé d'éclairage représenté matriciellement.

En variante, si la valeur de la typologie d'éclairage désigne un état imposé d'éclairage, l'instant d'application d'un évènement caractérise l'instant de début d'application de l'état imposé d'éclairage propre audit évènement et avantageusement, l'ensemble de valeurs caractéristiques déterminées contient pour chaque évènement une valeur caractérisant une fin d'application de l'état imposé d'éclairage propre audit évènement, sous forme d'une durée (en nombre de rangs ou en temps à partir du début de l'exposition du capteur) ou d'un instant de fin d'application. De même, l'instant de fin d'application d'un évènement est préférentiellement défini relativement au début d'exposition, propre à l'acquisition concernée, du premier rang dans la dimension prédéterminée de la matrice d'acquisition, la valeur caractérisant l'instant de fin d'application d'évènement permet donc de désigner un rang, ici une ligne, du motif imposé d'éclairage représenté matriciellement.

Pour cette première séquence temporelle d'éclairage est donc calculé, à partir des caractéristiques de ses évènements, la luminosité moyenne théorique MLT de chaque ligne du motif imposé d'éclairage. En variante, le calcul de la luminosité moyenne théorique MLT de chaque ligne du motif imposé d'éclairage peut être mis en œuvre lors de l'étape E4 d'exécution, par un module de détermination d'une unité centrale de traitement, ici, du dispositif 106 de traitement de données interne au terminal 1, d'instructions de caractérisation E4 d'un motif observé d'éclairage.

Que la valeur de la typologie d'éclairage désigne une modification d'éclairage ou un état imposé d'éclairage, la durée entre deux évènements affectant la même source d'éclairage ou respectivement la durée d'un évènement, est préférentiellement exprimée en unité de temps, et permet un calcul de correspondance en nombre de rangs. Cette durée d'application est préférentiellement non nulle et inférieure à la durée d'exposition prédéterminée , ce qui correspond à une exposition d'un nombre de rangs de l'obturateur déroulant, par exemple entre 100 et 600 lignes pour un obturateur à 1000 lignes et notamment égale à la moitié de la durée d'exposition, soit 500 lignes dans l'exemple. Il s'agit notamment de distinguer mieux la contribution de l'éclairage par rapport au bruit. La durée d'application est notamment choisie en fonction de l'utilisation ultérieure ou non des images acquises. En effet, si les images acquises ne servent qu'à l'antifraude les durées d'application peuvent être plus courtes que si les images acquises servent également de support à l'algorithme biométrique d'authentification, leur qualité en terme de clarté d'image pouvant alors être recherchée. Par exemple, dans le cas du backlight, des coupures de signal en moyenne inférieures au tiers de la durée d'exposition (c'est-à-dire du temps entre deux acquisitions d' images) sont privilégiées, pour ne pas affecter sensiblement des algorithmes biométriques d'authentification. De manière similaire, dans le cas de diodes électroluminescentes bleues ou vertes, un éclairage au moins pendant la moitié de la durée d'exposition est privilégié. Le tirage aléatoire est alors contraint dans les plages pré-séléctionnées.

Le tirage décrit ici est aléatoire et notamment configuré de manière à ne pas reproduire le même défi pour la même personne et notamment sur le même terminal. Pour ce faire, les valeurs tirées au sort enregistrées et horodatées dans une mémoire en association avec l'identifiant (préférentiellement anonymisé) de chaque utilisateur pour lequel le procédé a été appliqué et notamment l' identifiant du terminal 1 sur lequel l'acquisition a eu lieu , créant ainsi un registre des exclusions pour les prochains tirages et ce registre d'exclusion est consulté lors de l'étape E1 de détermination. Préférentiellement ce registre des exclusions est hébergé dans la même mémoire que le registre des statuts horodatés. Si le registre d'exclusion est hébergé dans la mémoire locale du dispositif 106 de traitement de données du terminal 1, le seul identifiant utilisateur peut suffire, et s'il est hébergé dans une mémoire d'un serveur distant 101 (notamment en cas de multiples terminaux), l'identifiant du terminal 1 est par exemple communiqué au serveur distant en tant que metadata lors de chaque connexion au serveur distant. L'identifiant (préférentiellement anonymisé) de l'utilisateur est par exemple créé et mémorisé, préférentiellement par le serveur distant, par chiffrement d'un gabarit biométrique du dermatoglyphe acquis obtenu sur la base des images acquises à l'étape E2. Ainsi, au prochain tirage au sort pour le même terminal, le tirage exclura de la liste ou de la plage les valeurs des paramètres déjà appliqués pour cet utilisateur, notamment sur ledit terminal. Ce mode de mise en oeuvre permet de bloquer la répétition du même défi sur le même terminal pour le même utilisateur. Avantageusement, chaque exclusion du registre d'exclusion est temporaire.

Avantageusement, en cas de système de contrôle d'accès biométrique comprenant plusieurs terminaux d'acquisition biométrique de dermatoglyphe par contact, l'ensemble de valeurs caractéristiques définissant un ensemble d'évènements lumineux à appliquer à destination de la surface d'acquisition du dermatoglyphe comporte l'identifiant du terminal ayant reçu ladite requête d'identification.

Les instructions de pilotage en intensité, de l'au moins une source d'éclairage émettant dans une première longueur d'onde de manière à appliquer le premier ensemble d'évènements lors d'une première acquisition biométrique, sont déterminées par l'unité centrale 601 du dispositif 106 de traitement sur la base des valeurs du premier ensemble de valeurs caractéristiques. Si les valeurs du premier ensemble de valeurs caractéristiques sont déterminées localement par une unité centrale 601 du dispositif 106 de traitement du terminal 1 d'acquisition biométrique, et que ce dernier comporte également l'organe de pilotage, aucune transmission à distance de ces valeurs n'est requise en revanche si les valeurs du premier ensemble de valeurs caractéristiques sont déterminées par une unité centrale de traitement hébergée dans un dispositif distant 101, c'est-à-dire externe au terminal 1 d'acquisition biométrique, lesdites valeurs sont alors transmises via un réseau de communication et notamment de manière sécurisée, préférentiellement chiffrée, à l'organe de pilotage du terminal 1 d'acquisition biométrique, constitué par exemple du circuit imprimé PCB du capteur du terminal 1.

Le procédé P de sécurisation se poursuit alors par l'exécution, par l'organe de pilotage, des instructions de pilotage E2 en intensité de l'au moins une source d'éclairage émettant dans une première longueur d'onde de manière à appliquer le premier ensemble d'évènements lors d'une première acquisition biométrique. Dans le mode de réalisation illustré ici, la source 5 d'éclairage est composée d'un ensemble de diodes électroluminescentes rouges et émet dans une seule longueur d'onde et le signal temporellement variable de pilotage applique le premier ensemble d'évènement composé par exemple d'une coupure de la source d'éclairage puis d'un allumage de la source d'éclairage aux instants d'application tirés au sort. L'instant de coupure étant tiré au sort entre 0 et la durée d'exposition, et l'instant d'allumage étant tiré au sort entre l'instant de coupure et la durée d'exposition. L'exécution des instructions de pilotage E2 en intensité de la source d'éclairage applique le motif imposé pendant l'acquisition E3 biométrique. Avantageusement, on peut prévoir que toute acquisition commence avec émission de la source 5 d'éclairage et si le motif imposé ne prévoit pas l'extinction de la source lumineuse une commande d'extinction est appliquée à la fin de l'acquisition.

L'exécution des instructions de pilotage E2 est mise en œuvre conjointement à l'acquisition E3 biométrique puisque dans le mode de réalisation décrit ici l'instant 0 correspond au démarrage de l'acquisition biométrique, c'est-à-dire au début de l'exposition de la surface d'acquisition linéairement par l'obturateur déroulant selon la dimension verticale pendant la durée d'exposition prédéterminée. Dans le mode de réalisation illustré ici, et de manière non limitative, l'obturateur déroulant expose ligne par ligne, et le signal brut émis par le capteur est directement sous forme de matrice d'acquisition, appelée aussi image brute. Préférentiellement, le signal brut émis par le capteur est converti sous forme d'une matrice d'acquisition. De même, dans le cas d'un capteur couleur, une opération de dématriçage (conversion matrice de Bayer en image RGB) est préférentiellement réalisée sur la donnée brute (signal issu du capteur) avant sa transmission. Le signal brut peut également faire l'objet de transformation mineure avant transmission, notamment de transformation n'impactant pas les calculs ultérieurs. La durée d'exposition est très courte et le doigt de l'utilisateur est supposé rester immobile pendant l'acquisition, qui dure par exemple 60 ms. On notera que cette supposition est aisément vérifiable par des algorithmes de détection du doigt.

Le procédé P de sécurisation se poursuit alors par l'exécution, par un module de caractérisation d'une unité centrale de traitement, ici, du dispositif 106 de traitement de données interne au terminal 1, d'instructions de caractérisation E4 d'un motif observé d'éclairage, à partir de la matrice d'acquisition de l'acquisition biométrique. Dans un cas extrême avec une acquisition d'image toutes les 60ms, correspondant au temps total d'acquisition, et une durée d'exposition de chaque pixel de 30ms, c'est-à-dire de moitié du temps d'acquisition, un flash lumineux ne va pas influencer quelques lignes mais toutes les lignes, en proportion variable, et plutôt que de détecter des lignes plus ou moins lumineuses (comme par exemple dans le cas d'une durée d'exposition inférieure au dixième du temps d'acquisition), la luminosité moyenne par ligne va varier progressivement sur toute l'image. La caractérisation E4 du motif observé d'éclairage repose alors sur la détection des variations de luminosité moyenne MLI par ligne de la matrice d'acquisition obtenue à partir du signal représentatif du trait biométrique acquis, autrement dit à partir de l'image acquise par le dispositif optique d'acquisition. De manière non limitative, cette étape E4 de caractérisation pourrait résulter de la mise en œuvre d'un réseau de neurones, notamment convolutif, entraîné préalablement sur des bases de données d'acquisition et de motifs observés.

Disposant, dans ce mode de mise en œuvre, de l'estimation, éclairage éteint, de la luminosité moyenne de chaque ligne MLI_ext à partir de l'image acquise par le dispositif optique d'acquisition lors de la phase de détection de présence , on soustrait la luminosité moyenne de chaque ligne MLI_ext de l'image acquise par le dispositif optique d'acquisition lors de la phase de détection de présence à la luminosité moyenne MLI par ligne à partir de l'image acquise par le dispositif optique d'acquisition lors des variations lumineuses. Cette soustraction permet de retirer de la matrice d'acquisition la lumière qui n'est pas due à l'éclairage du capteur.

Ces étapes E1, E2, E3 et E4 peuvent être répétés pour un deuxième ensemble d'évènements lors d'une deuxième acquisition, le doigt étant supposé immobile.

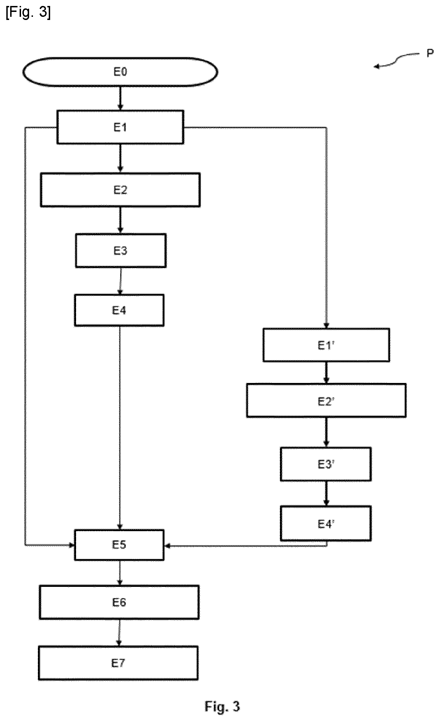

Une fois le(s) motif(s) observé(s) d'éclairage caractérisé(s), le procédé P se poursuit par l'exécution, par un module d'évaluation d'une unité centrale de traitement, ici, du dispositif 106 de traitement de données interne au terminal 1, d'instructions d'évaluation E5 d'un indice de correspondance comme explicité ultérieurement en lien avec la figure 3 . En variante, la caractérisation E4 du premier motif peut également être latente et sous-jacente à l'étape E5 d'évaluation de l'indice de correspondance, notamment si cette dernière est mise en œuvre par un réseau de neurones.

Une fois l'indice de correspondance évalué, le procédé se poursuit par l'exécution, par un module de décision d'une unité centrale de traitement, ici, du dispositif 106 de traitement de données interne au terminal 1, d'instructions de décision E6 de présence ou d'absence de fraude par comparaison de l'indice de correspondance à un seuil de correspondance de manière à poursuivre le procédé par une étape d'enrôlement biométrique ou une étape d'authentification biométrique en cas de satisfaction au seuil de correspondance. En effet, le capteur étant par construction assez insensible à la lumière extérieure, les perturbations extérieures sont faibles, ainsi, si le(s) motifs(s) observé(s) ne correspond(ent) pas au(x) motif(s) imposé(s), ce qui est notamment évalué par comparaison du taux de correspondance calculé à un seuil, le procédé est interrompu, notamment avec émission d'une alerte ; sinon le procédé se poursuit ici par une étape d'authentification biométrique de l'utilisateur. Une reconnaissance biométrique (matching) de dermatoglyphe à partir de l'image acquise et par rapport à une donnée biométrique (par exemple sous forme de gabarit biométrique) enrôlée et enregistrée en mémoire, localement, est mise en œuvre. Dans les deux cas le statut horodaté, de réussite (absence de fraude) ou d'échec (fraude détectée), est préférentiellement mémorisé dans un registre local RAM ou dans un registre externe.

Plusieurs acquisitions peuvent être réalisées et analysées l'une à la suite de l'autre selon le procédé décrit, par exemple pour plusieurs dermatoglyphes, l'étape finale de décision E6 étant alors commune et basée sur les multiples indices de correspondance calculés. C'est-à-dire que les deux conditions selon lesquelles la comparaison de chaque indice de correspondance à chaque seuil de correspondance (ou le même seuil de correspondance) doivent être respectées pour poursuivre le procédé biométrique d'authentification, et un statut horodaté d'absence de fraude inscrit dans le registre lié au procédé de sécurisation alors que sinon le procédé biométrique d'authentification est interrompu et un statut horodaté de présence de fraude et inscrit dans le registre lié au procédé de sécurisation.

Des étapes intermédiaires de traitement de données peuvent être mises en œuvre avant de procéder à la génération de la donnée biométrique enrôlée ou à authentifier, à partir des images brutes acquises de manière par exemple à les transformer, notamment avant de générer l'image reconstituée du trait biométrique et/ou du gabarit biométrique. Le traitement intermédiaire peut consister en un ou plusieurs des opérateurs de traitements d'images suivants :
- opérateurs de modification pixel à pixel (ou point à point). Il s'agit par exemple de la correction de couleur, de teinte, de gamma;
- opérateurs locaux, notamment ceux pour la gestion du flou local ou du contraste, un opérateur local s'appuyant sur un voisinage du pixel, c'est-à-dire plus qu'un pixel mais moins que toute l'image ; un opérateur local permet, à partir d'un voisinage d'un pixel d'entrée, d'obtenir un pixel de sortie ;
- opérateurs dans l'espace fréquentiel (après transformée de l'image). Le fait de faire intervenir un ou plusieurs opérateurs dans l'espace fréquentiel ouvre la voie à diverses possibilités de réduction de bruit analogique ou numérique, telles que réduction des artefacts de compression, amélioration de la netteté de l'image, du piqué ou du contraste.

La figure 3 illustre un schéma de principe selon un autre mode de mise en œuvre dans le procédé P. Dans le mode de réalisation illustré en relation avec cette figure, les étapes :
- de détermination E1 du premier ensemble de valeurs caractéristiques définissant un premier ensemble d'évènements lumineux dont notamment le calcul de la luminosité moyenne théorique MLT1 de chaque ligne du premier motif imposé,
- de pilotage E2 en intensité de la source d'éclairage de manière à appliquer le premier ensemble d'évènements lors d'une première acquisition E3 biométrique,
- de première acquisition E3 biométrique et
- de caractérisation E4 d'un premier motif observé d'éclairage et notamment de la luminosité moyenne MLI1 de chaque ligne de la matrice d'acquisition de la première acquisition ;
sont par exemple les mêmes que celles précédemment décrites en relation à la figure 2. Dans ce mode de mise en œuvre sont de nouveau mises en œuvre les étapes déjà décrites :
- une étape de détermination E1' d'un deuxième ensemble de valeurs caractéristiques définissant un deuxième ensemble d'évènements lumineux à appliquer à destination d'une surface d'acquisition du dermatoglyphe comportant notamment le calcul de la luminosité moyenne théorique MLT2 de chaque ligne du deuxième motif imposé. Le deuxième ensemble d'évènements décrit une deuxième séquence temporelle d'éclairage représentée matriciellement sous forme d'un deuxième motif imposé d'éclairage, lesdites valeurs caractérisant pour chaque évènement du deuxième ensemble une typologie d'éclairage de la surface d'acquisition et un instant d'application dudit évènement , au moins une valeur caractéristique par évènement, parmi la typologie d'éclairage et l'instant d'application, étant déterminée par tirage aléatoire. Cette étape de détermination E1' est ici représentée après l'étape de caractérisation E4 du premier motif observé néanmoins elle pourrait également être réalisée aussitôt l'étape de détermination E1 du premier ensemble de valeurs caractéristiques, afin notamment de ne pas reproduire les mêmes évènements du premier ensemble d'évènements ; puis
- une étape de pilotage E2' en intensité d'au moins une source d'éclairage de manière à appliquer le deuxième ensemble d'évènements lors d'une deuxième acquisition biométrique; puis
- une étape de deuxième acquisition E3' biométrique, par exposition de la surface d'acquisition du capteur linéairement selon la dimension prédéterminée pendant une durée d'exposition prédéterminée (ici la même que la durée d'exposition appliquée lors de la première acquisition E3 biométrique), émise sous forme de matrice d'acquisition ;
- une étape de caractérisation E4', à partir de la matrice d'acquisition de la deuxième acquisition biométrique E3' d'un deuxième motif observé d'éclairage et notamment de la luminosité moyenne MLI2 de chaque ligne de la matrice d'acquisition de la deuxième acquisition.

Puis l'étape E5 d'évaluation de l'indice de correspondance est à la fois fonction du premier et du deuxième motif observé ainsi que du premier et deuxième motif imposé. Par exemple, on calcule un rapport CMLI des motifs observés ligne à ligne, notamment sous forme d'un vecteur, entre la luminosité moyenne MLI2 de chaque ligne de la matrice d'acquisition de la deuxième acquisition et la luminosité moyenne MLI1 de chaque ligne de la matrice d'acquisition de la première acquisition : tel que CMLI = MLI2 / MLI1 et un rapport CMLT des motifs imposés ligne à ligne, notamment sous forme d'un vecteur, entre la luminosité théorique MLT2 de chaque ligne du deuxième motif imposé et la luminosité théorique moyenne MLT1 de chaque ligne du premier motif imposé, tel que: CMLT = MLT2 / MLT1, ces rapports correspondent à des coefficients multiplicateurs. Par exemple si on a MLI1 = [1,2,3,4,5] et MLI2 = [2,4,3,4,5], alors CMLI = [2,2,1,1,1]), de même pour calculer CMLT. Préférentiellement, dans le cas où des lignes comporteraient des valeurs proches de 0, c'est-à-dire que les lignes seraient trop sombres, de manière à éviter une division par 0, ces lignes du rapport CMLI des motifs observés et respectivement du rapport CMLT des motifs imposés sont ignorées du calcul ou supprimées, dans une limite de n% (par exemple 30%) des lignes, n étant dépendant du capteur et sachant qu'une ligne sombre correspond à une ligne où le doigt n'est pas présent. Puis le rapport CMLI des motifs observés et le rapport CMLT des motifs imposés sont comparés, en calculant par exemple la norme p du vecteur V tel que V = CMLI - CMLT, de manière à évaluer ici un indice de non-correspondance..

Est alors mise en œuvre l'étape de décision E6 de présence ou d'absence de fraude par comparaison de l'indice de correspondance au seuil de non correspondance de manière à poursuivre le procédé par une étape d'enrôlement biométrique ou une étape d'authentification biométrique en cas d'absence de fraude. Le calcul précédant donnant pour résultat un nombre positif représentatif de l'erreur, c'est-à-dire l' indice de non correspondance, s'il est supérieur au seuil de non-correspondance il indique une fraude alors qu'une absence de fraude se traduit par un indice de non correspondance strictement inférieur au seuil de non-correspondance. Par exemple, pour une erreur moyenne de 5% tolérée sur le vecteur V relativement à la moyenne de CMLT (préférée à CMLI pour des raisons de robustesse), cela correspondrait, pour une norme 1 (p=1), à une valeur de seuil de non correspondance pour une image de 1000 lignes de (0.05 x nombre de lignes =) 50. On notera que la valeur de p élevée pour la norme p pénalisera les valeurs extrêmes, telles que des erreurs isolées. Pendant cette étape de décision E6 sont également inscrits au registre les résultats de l'étape, notamment sous forme de statut d'absence ou de présence de fraude.

Avantageusement, l'acquisition d'au moins deux images avec éclairage permet de mettre en œuvre une étape complémentaire de reconstitution E7 d'une image du dermatoglyphe à partir de la première et de la deuxième matrices d'acquisition, notamment par fusion à partir desdites matrices d'acquisition acquises consécutivement. Cette étape de reconstitution E7 pourrait en variante être mise en œuvre lors de l'authentification biométrique ou de l'enrôlement. Cette reconstitution permet d'améliorer ensuite la fiabilité et les performances de reconnaissance biométrique. Ainsi, dans le cas d'une application du procédé en vue d'un enrôlement d'un utilisateur la fusion permet notamment d'obtenir une image complète sans zone altérée (c'est-à-dire de moindre éclairage). Dans un mode de réalisation, si lors de l'étape de reconstitution E7, la fusion des zones communes sans altération montre des divergences, liées à un mouvement de l'empreinte par exemple, une nouvelle mise en œuvre des étapes E1 à E6 du procédé de sécurisation peut être requise. Une fois l'image reconstituée, cette dernière peut être fournie aux algorithmes biométriques, par exemple en vue de la génération de gabarit et de son enregistrement en base de données biométriques d'enrôlement. De même, dans le cas d'une application du procédé en vue d'une identification ou authentification, dès la première acquisition E3, des algorithmes biométriques peuvent rechercher la présence de points caractéristiques en qualité suffisante et à distance suffisante des zones altérées, afin de trouver une correspondance (matching) fiable. Si la fiabilité est insuffisante (nombre de points caractéristique inférieur à un seuil prédétermine par exemple) on peut fusionner plusieurs images acquises jusqu'à obtenir une correspondance avec une fiabilité suffisante.

On notera que, le motif imposé d'éclairage est de nature aléatoire et qu'une fois l'image afférente acquise, les calculs peuvent être réalisés ultérieurement notamment de manière déportée ainsi les étapes E4, E5 et E7 peuvent être réalisée n'importe quand après les étapes E1/E2/E3, et ce aussi bien en local que de façon déportée.

En variante, la durée d'exposition de la deuxième acquisition E3' biométrique peut être différente de la durée d'exposition de la première acquisition E3 biométrique, ces valeurs étant connues du système, leur ratio sera alors pris en considération lors de l'étape E5 d'évaluation de l'indice de correspondance.

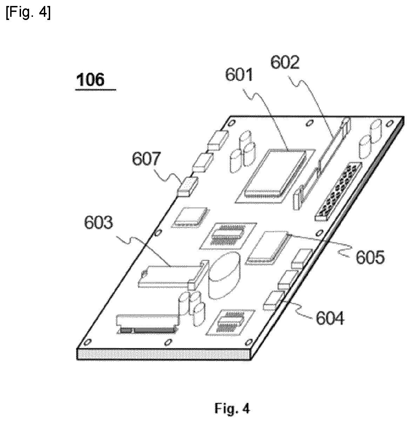

La figure 4 représente un exemple de structure d'un dispositif 106 de traitement de données pour la mise en œuvre d'un ou plusieurs modes de réalisation de l'invention. Le dispositif 106 de traitement de données comprend typiquement une ou plusieurs unités centrales de traitement (CPU) 601 et/ou un ou plusieurs processeurs graphiques (GPU) 605, un module physique (NET) 604 de communication, un ou plusieurs modules physiques 607 d'entrée / sortie pour l'échanges de données avec des dispositifs externes (tel que le dispositif optique d'acquisition) (bus de communication non représenté), un support 602 de stockage transitoire tel qu'une mémoire vive (RAM), un support 603 d'enregistrement non-transitoire (FLASH), et des bus de communication (non représentés) pour le transfert de données entre les composants internes du dispositif 106 de traitement de données.

Le dispositif 106 de traitement de données permet l'exécution d'un ou plusieurs modules de programmes comprenant des instructions qui, lorsque le ou les modules de programme sont exécutés, conduisent le dispositif 106 de traitement de données à mettre en œuvre le procédé selon l'invention. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Le dispositif 106 de traitement de données comporte les éléments suivants, connectés entre eux via un bus de communication:
- une unité centrale de traitement (CPU) 601, tel qu'un microprocesseur, et incluant notamment une horloge interne haute précision utilisée pour : enregistrer le temps précis lorsque le capteur remonte la fin de transmission de l'image précédente.et exécuter chaque changement à l'instant prévu. De même, un générateur de nombre aléatoire TRNG (True Random Number Generator) tirant les valeurs aléatoires est inclus dans le CPU 601;
- une mémoire transitoire 602, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif est préférentiellement complétée par une mémoire vive 602 optionnelle connectée à un port d'extension, par exemple ;
- une mémoire non transitoire 603 pour stocker les programmes informatiques et données de calibration pour la mise en œuvre des modes de réalisation de l'invention ; les programmes informatiques stockés comprennent notamment un programme informatique comprenant des instructions adaptées à la mise en œuvre de tout ou partie des étapes du procédé selon l'invention lorsque ledit programme est exécuté sur le dispositif 106 de traitement, ladite mémoire non transitoire 603 est alors un exemple de moyen non-transitoire de stockage d'informations, amovible ou non;
- un module de communication 604 comportant une interface réseau 604, est connectée à un réseau de communication sur lequel des données numériques à traiter sont transmises ou reçues ; L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lus à partir de l'interface de réseau pour la réception sous le contrôle de l'application logicielle exécutée dans le processeur 601 ;
- une interface IHM utilisateur, comportant notamment un processeur graphique 605, pour recevoir des entrées d'un utilisateur ou pour afficher des informations à un utilisateur notamment des informations de guidage (visuelles et/ou vocales);
- un module d'entrée/sortie 607 pour la réception / l'envoi de données depuis / vers des périphériques externes tels que disque dur, support de stockage amovible ou autres.

Le code exécutable peut être stocké dans la mémoire non transitoire 603, par exemple une mémoire flash ou une mémoire morte, ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage du dispositif 106 de traitement de données, tel que la mémoire 603, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités, tel que la mémoire non transitoire 603. Après la mise sous tension, le CPU 601 est capable d'exécuter des instructions de la mémoire RAM transitoire 602, relatives à une application logicielle. Un tel logiciel, lorsqu'il est exécuté par le processeur 601, permet l'exécution du procédé selon l'invention.

Dans un mode de réalisation, l'appareil est un appareil programmable qui utilise un logiciel pour mettre en œuvre l'invention. En variante, la présente invention peut être mise en œuvre dans le matériel (par exemple, sous la forme d'un circuit intégré spécifique ou ASIC (de l'anglais *application-specific integrated circuit*) ou sous la forme d'un composant logique programmable ou FPGA (de l'anglais *field programmable gate array*).

Selon un mode de réalisation, le dispositif de traitement de données 106 est uniquement hébergée localement dans le terminal 1 d'acquisition biométrique, ce qui est par exemple l'architecture privilégiée dans le cas d'un terminal fixe, par exemple une borne fixe dédiée aux contrôles d'identité. Le dispositif de traitement de l'information 106 peut en variante être externe au terminal 1, ou distribuée et comporter de multiples sous unités de traitement, notamment au moins en partie externe au terminal 1 et communiquant entre elles via l'interface réseau 604. De même, en fonction de la nature du terminal notamment, tout ou partie de la mémoire peut être physiquement déportée, hébergée par exemple sur un serveur distant 101. Par exemple, pour un terminal 1 fixe notamment, le terminal est maître et des modules d'initialisation, d'acquisition et de pilotage sont hébergés localement dans le terminal 1 mais les autres modules peuvent ne pas être, ou en partie seulement, hébergés localement mais dans une entité de traitement physiquement déportée esclave, telle qu'un serveur distant 101, ce partage des calculs entre terminal 1 local et serveur distant permet de n'envoyer au serveur distant 101 que les informations nécessaires à la prise de décision et ainsi de minimiser le temps de réponse lié à l'échange de données et le débit réseau, sans compromettre la sécurité côté client liée à de l'ingénierie inverse. On peut y compris avoir des calculs redondants, le serveur distant vérifiant tout ou partie de ce qu'a fait le terminal 1. En variante, le serveur distant 101 est le maître et le terminal utilisateur 1 l'esclave, de manière à ce que le tirage aléatoire soit exécuté par le serveur distant, puis le motif imposé transmis en temps réel par le serveur distant 101 au terminal 1 de manière à ce que ce dernier mette en œuvre le pilotage en étant agnostiques des valeurs tirées aléatoirement caractérisant le défi, ce qui permet de maximiser la sécurité du terminal 1 et de prévenir un rejeu du côté du terminal utilisateur, ce dernier ne décidant pas unilatéralement du défi. De même, le terminal 1 peut ensuite envoyer au serveur distant 101 directement les signaux acquis bruts chiffrés pour minimiser les calculs locaux et réduire les risques liés à de l'ingénierie inverse ou au contraire transmettre les informations directement nécessaires à la prise de décision (par exemple l'indice de correspondance) pour minimiser la charge réseau et le temps de réponse lié à l'échange de données et dépendant du débit réseau. Préférentiellement, les informations échangées, notamment du serveur distant 101 au terminal 1, sont chiffrées pour améliorer la sécurité des échanges.

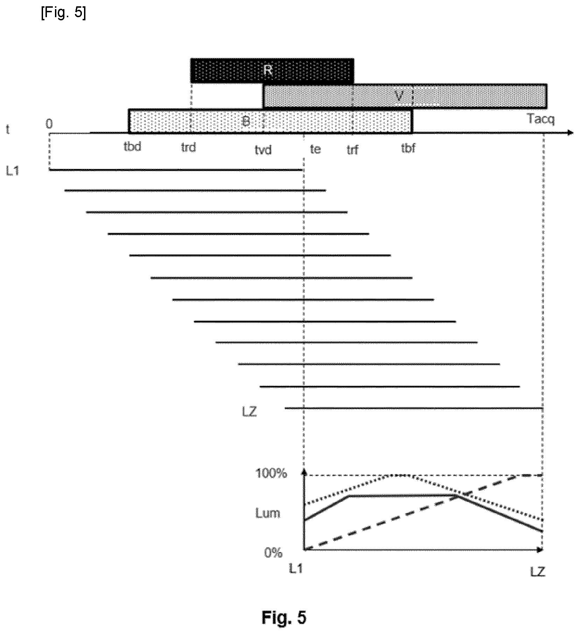

L'exemple simplifié en figure 5 illustre la séquence temporelle d'application dans le temps t d'un premier ensemble d'évènements lumineux comportant ici trois évènements définis comme :
- un éclairage B de longueur d'onde bleue, par une diode électroluminescente bleue, débutant à l'instant tbd et finissant à l'instant tbf ;
- un éclairage V de longueur d'onde verte, par une diode électroluminescente verte, débutant à l'instant tvd et finissant à l'instant tvf ;
- un éclairage R de longueur d'onde rouge, par une diode électroluminescente rouge, débutant à l'instant trd et finissant à l'instant trf.
Dans ce mode de réalisation seules les diodes électroluminescentes d'une source annexe RVB d'éclairage rouge vert bleu sont utilisées mais la source principale d'éclairage de diodes électroluminescentes rouges (backlight) pourrait également être utilisée en combinaison.

Dans l'exemple illustré, le temps t égal à 0 correspond au début d'exposition du premier rang dans la dimension prédéterminée, ici ligne 1 L1, de la matrice d'acquisition, le temps d'exposition est de 30 ms pour une durée totale d'acquisition Tacq de 60 ms, soit une fréquence d'acquisition de 15 images par seconde (fps), ce qui signifie que chacune des lignes de L1 à LZ sera exposée 30 ms , soit une demi-période d'acquisition. La première ligne L1 est terminée d'exposer à te et au même instant son vecteur ligne envoyé sur le bus de communication entre le dispositif optique d'acquisition et le dispositif de traitement de données 106, et ainsi de suite pour les lignes suivantes jusqu'à la dernière ligne LZ dont l'exposition se termine au même moment que la fin de l'acquisition Tacq. Dans ce mode de réalisation, un capteur RVB est utilisé, ce qui signifie que 15 images par seconde sont acquises pour chaque canal R, V, B.

Le graphe situé sous les lignes représente la luminosité Lum moyenne par canal de couleur et par ligne à réception sur le bus, le canal bleu (par exemple entre 455 à 465 nm) étant représenté par une ligne en pointillés rapprochés, le canal vert (par exemple entre 515 à 525 nm) étant représenté par une ligne en pointillés espacés et le canal rouge (par exemple entre 620 à 630 nm) par une ligne continue. Cette représentation mise sous forme de matrice illustre la luminosité moyenne de chaque ligne MLI du motif observé. En effet, l'information utile se compose d'une valeur de luminosité Lum moyenne par ligne, et ici par canal de couleur puisqu'un capteur couleur RVB est utilisé , et ces valeurs de luminosité Lum moyenne sont calculées à partir de la matrice d'acquisition. Le graphe tel qu'illustré représente le cas d'une image uniforme (capteur éclairé uniformément, notamment sans doigt apposé) pour la clarté du propos. En effet, quand un doigt est apposé, le graphe est modifié, néanmoins cela n'affecte pas les calculs car on compare deux images successives, le doigt étant immobile.

L'évaluation de correspondance des motifs repose sur le fait que le capteur est de type obturateur déroulant, les lignes étant exposées les unes après les autres, et ce de façon prévisible. De même sont connues à l'avance, prédéterminées, par les réglages de cadence du capteur, la durée entre la fin de transmission d'une image et le début de l'exposition de la première ligne du capteur, ainsi que la durée entre deux expositions de lignes successives, toutes ces durées étant respectées à la microseconde près et mesurées par l'horloge interne haute précision. L'horloge interne haute précision du CPU 601 permet donc de mesurer le temps de façon précise entre les instants de modification d'éclairage et la fin d'envoi de l'image. Ainsi tout changement mineur d'intensité de la source principale d'éclairage a comme conséquence un changement moyen de luminosité A commençant à la ligne L. Comme A est connu et L peut être déduit de la durée entre la fin de réception de l'image précédente et de l'instant auquel a été piloté le changement d'éclairage, on peut déterminer la luminosité moyenne théorique MLT imposée par ligne afin de de pouvoir la comparer à la luminosité moyenne MLI observée par ligne à partir de l'image acquise par le dispositif optique d'acquisition et ainsi vérifier si l'image reçue contient la preuve du défi. De même, toute coupure brève de la source principale d'éclairage aura comme conséquence la présence de N lignes sous-exposées à partir de la ligne L, N et L pouvant être calculés de façon précise, ce qui permet de vérifier si l'image reçue contient la preuve de ce changement. De même, tout bref allumage d'une DEL rouge, verte ou bleue de la source annexe d'éclairage RVB avec une couleur C a comme conséquence N lignes surexposées en couleur C, à partir de la ligne L. C étant connu et N et L pouvant être déduits de par la durée entre la fin de réception de l'image précédente et l'instant auquel ont été piloté lesdits changements, alors on peut vérifier si l'image reçue contient la preuve de ces changements.

Avantageusement, le procédé P de sécurisation comprend une phase additionnelle de contrôle du terminal, préalable à l'étape d'initialisation, notamment au démarrage du terminal 1 ou récurrente et/ou se produisant à intervalle régulier quand le terminal 1 est en veille, mettant en œuvre les étapes E1 à E5 du procédé selon l'invention (sans doigt) et si l'indice de correspondance obtenu est inférieur à un seuil prédéterminé de contrôle (préférentiellement égal au seuil de correspondance, ou légèrement inférieur pour en augmenter la tolérance), il est considéré que des altérations inattendues se produisent, traduisant un dysfonctionnement du terminal et une ou plusieurs actions parmi les suivantes peuvent être effectuées : remontée d'une alerte, verrouillage du produit, retour aux paramètres usine du terminal. Cette phase additionnelle de contrôle est particulièrement utile pour les dispositifs optiques d'acquisition dans lesquels une partie de la surface d'acquisition, dite zone de travail, jouit d'une réflexion totale ou quasi totale, le capteur ayant un champ plus large et non restreint à cette zone de travail.

Dans un mode de réalisation dans lequel le dispositif optique d'acquisition du terminal 1 n'est pas couleur RVB mais monochrome, le capteur acquiert alors une seule image, en niveaux de gris par exemple, par chaque période d'acquisition mais demeure capable de détecter les changements de luminosité, et un étalonnage fin en intensité permet de différencier la couleur des lignes surexposées, notamment au moyen de repères colorés du dispositif optique d'acquisition disposés dans le champ d'acquisition du capteur hors zone de travail.

L'invention permet donc de sécuriser les acquisitions biométriques notamment en surveillant la liaison entre le capteur biométrique contact de trait biométrique et le dispositif 106 de traitement de données (local ou distant) qui reçoit et traite les données acquises par le capteur en vue de l'enrôlement ou de l'authentification.

## Revendications

1. Procédé (P) de sécurisation d'acquisition par contact d'un trait biométrique d'un utilisateur comportant des étapes de :
- détermination (E1) d'un premier ensemble de valeurs caractéristiques définissant un premier ensemble d'évènements lumineux à appliquer à destination d'une surface d'acquisition du trait biométrique, ledit premier ensemble d'évènements décrivant une première séquence temporelle d'éclairage représentée matriciellement sous forme d'un premier motif imposé d'éclairage, lesdites valeurs caractérisant pour chaque évènement du premier ensemble une typologie d'éclairage de la surface d'acquisition et un instant d'application dudit évènement , au moins une valeur caractéristique par évènement, parmi l'instant d'application et la typologie d'éclairage, étant déterminée par tirage aléatoire ;
- pilotage (E2) en intensité d'au moins une source d'éclairage, émettant dans une première longueur d'onde, de manière à appliquer le premier ensemble d'évènements lors d'une première acquisition (E3) biométrique,
- première acquisition (E3) biométrique, par exposition de la surface d'acquisition linéairement selon une dimension prédéterminée pendant une durée d'exposition prédéterminée, émise sous forme de matrice d'acquisition ;
- caractérisation (E4), à partir de la matrice d'acquisition de la première acquisition biométrique, d'un premier motif observé d'éclairage ;
- évaluation (E5) d'un indice de correspondance fonction du premier motif observé et du premier motif imposé ;et
- décision (E6) de présence ou d'absence de fraude par comparaison de l'indice de correspondance à un seuil de correspondance de manière à poursuivre le procédé par une étape d'enrôlement biométrique ou une étape d'authentification biométrique en cas de satisfaction au seuil de correspondance.

2. Procédé selon la revendication 1, dans lequel l'évaluation (E5) d'un indice de correspondance comporte une comparaison du premier motif observé avec le premier motif imposé, l'indice de correspondance dépendant d'un rapport entre le premier motif observé et le premier motif imposé .

3. Procédé selon l'une quelconque des revendications précédentes comportant en outre des étapes de :
- détermination (E1') d'un deuxième ensemble de valeurs caractéristiques définissant un deuxième ensemble d'évènements lumineux à appliquer à destination de la surface d'acquisition, ledit deuxième ensemble d'évènements décrivant une deuxième séquence temporelle d'éclairage représentée matriciellement sous forme d'un deuxième motif imposé d'éclairage, lesdites valeurs caractérisant pour chaque évènement du deuxième ensemble une typologie d'éclairage de la surface d'acquisition et un instant d'application dudit évènement , au moins une valeur caractéristique par évènement, parmi l'instant d'application et la typologie d'éclairage, étant déterminée par tirage aléatoire ;
- pilotage (E2') en intensité de la source d'éclairage de manière à appliquer le deuxième ensemble d'évènements lors d'une deuxième acquisition biométrique,
- deuxième acquisition (E3') biométrique, par exposition de la surface d'acquisition linéairement selon la dimension prédéterminée pendant une durée d'exposition prédéterminée égale à ou différente de la durée d'exposition prédéterminée, émise sous forme de matrice d'acquisition ;
- caractérisation (E4'), à partir de la matrice d'acquisition de la deuxième acquisition biométrique d'un deuxième motif observé d'éclairage;
- l'évaluation (E5) de l'indice de correspondance est fonction du deuxième motif observé et du deuxième motif imposé.

4. Procédé selon la revendication précédente, dans lequel l'évaluation (E5) d'un indice de correspondance comporte une comparaison des motifs observés avec les motifs imposés, l'indice de correspondance dépendant d'un rapport entre le premier motif observé et le deuxième motif observé, divisé par un rapport entre le premier motif imposé et le deuxième motif imposé.

5. Procédé selon l'une quelconque des revendications 3 à 4 , comprenant une étape de reconstitution (E7) d'une image du trait biométrique à partir de la première et de la deuxième matrices d'acquisition, notamment par fusion à partir desdites matrices d'acquisition

6. Procédé selon l'une quelconque des revendications précédentes, dans lequel le trait biométrique est un dermatoglyphe de doigt ou de paume.

7. Procédé selon l'une quelconque des revendications précédentes, dans lequel la valeur caractérisant l' instant d'application d'évènement désigne un rang du motif imposé d'éclairage représenté matriciellement.

8. Procédé selon l'une quelconque des revendications précédentes, dans lequel la valeur de la typologie d'éclairage désigne un état imposé d'éclairage, ou une modification d'éclairage par exemple parmi une modulation d'intensité de l'éclairage par la source d'éclairage, une coupure de la source d'éclairage ou un allumage de la source d'éclairage.

9. Procédé selon l'une quelconque des revendications précédentes, dans lequel lesdits instants d'application de chaque évènement de la première ou deuxième acquisition sont définis relativement au début d'exposition, propre à ladite acquisition, du premier rang dans la dimension prédéterminée de la matrice d'acquisition.

10. Procédé selon l'une quelconque des revendications 8 à 9, dans lequel la valeur de la typologie d'éclairage désigne l'état imposé d'éclairage, lesdits instants d'application de chaque évènement de la première ou deuxième acquisition caractérisant l'instant de début d'application de l'état imposé d'éclairage propre audit évènement.

11. Procédé selon la revendication 10 , dans lequel au moins un des ensembles de valeurs caractéristiques déterminées contient pour au moins un des évènements une valeur caractérisant une fin d'application de l'état imposé d'éclairage propre audit évènement.

12. Procédé selon l'une quelconque des revendications précédentes, dans lequel chaque motif imposé est exprimé sous forme d'une luminosité moyenne théorique (MLT) de chaque rang de sa matrice d'acquisition, chaque motif imposé étant déterminé à partir de la séquence temporelle d'éclairage qui le caractérise et de la durée d'exposition prédéterminée de la matrice d'acquisition.

13. Procédé selon l'une quelconque des revendications précédentes, dans lequel la caractérisation (E4) de motif observé est réalisée, pour chaque acquisition biométrique, par :
- un calcul d'une moyenne de luminosité par canal , notamment monochrome , rouge, vert, ou bleu, de chaque rang (MLI1,MLI2) de la matrice d'acquisition dans la dimension prédéterminée.

14. Système (100) de contrôle d'accès biométrique comprenant :
- un terminal (1) d'acquisition par contact d'un trait biométrique , ledit terminal comprenant :
- un dispositif optique d'acquisition par contact comprenant un capteur, une surface (3) d'acquisition, configurée de manière à être en contact avec le trait biométrique, et un obturateur déroulant configuré pour exposer la surface d'acquisition linéairement selon une dimension prédéterminée pendant une durée d'exposition prédéterminée, ledit dispositif optique d'acquisition étant configuré pour émettre un signal représentatif du trait biométrique acquis sous forme de matrice d'acquisition ,
- une source (5) d'éclairage émettant dans une première longueur d'onde et disposée à l'arrière de la surface (3) d'acquisition et émettant en direction de la surface (3) d'acquisition ;
- un organe de pilotage en intensité d'au moins une source d'éclairage émettant dans une première longueur d'onde de manière à appliquer le premier ensemble d'évènements lors d'une première acquisition biométrique,
- un bus de communication entre dispositif optique d'acquisition et un dispositif de traitement de données (106) ;
- le dispositif de (106) traitement de données , comprenant:
- un module de détermination d'un premier ensemble de valeurs caractéristiques définissant un premier ensemble d'évènements lumineux à appliquer à destination d'une surface d'acquisition du trait biométrique, ledit premier ensemble d'évènements décrivant une première séquence temporelle d'éclairage représentée matriciellement sous forme d'un premier motif imposé d'éclairage, lesdites valeurs caractérisant pour chaque évènement du premier ensemble une typologie d'éclairage de la surface d'acquisition et un instant d'application dudit évènement, au moins une valeur caractéristique par évènement, parmi l'instant d'application et la typologie d'éclairage, étant déterminée par tirage aléatoire ;
- un module de caractérisation d' un motif observé d'éclairage de ladite matrice d'acquisition ;
- un module d'évaluation d'un indice de correspondance fonction du motif observé et du motif imposé et de décision de présence ou d'absence de fraude.

15. Système selon la revendication précédente dans lequel sont inclus dans le dispositif (106) de traitement de données:
- une mémoire, stockant des données biométriques enrôlées, notamment sous forme de gabarit ;
- un module de reconnaissance biométrique à partir de la première acquisition biométrique ou d'une image reconstituée du trait biométrique et des données biométriques enrôlées.
